# EUROPÄISCHE PATENTSCHRIFT

(11) **EP 1 645 828 B1**
(45) Veröffentlichungstag und Bekanntmachung des Hinweises auf die Patenterteilung: **10.08.2016**
(21) Anmeldenummer: 05021968.2
(22) Anmeldetag: 07.10.2005
(51) Int. Cl.: F28D 9/00

(54) **Stapelscheibenwärmeübertrager**
Stacked plate heat exchanger
Échangeur de chaleur à plaques empilées

(30) Priorität: 11.10.2004 DE 102004049723
(43) Veröffentlichungstag der Anmeldung: 12.04.2006
(73) Patentinhaber: MAHLE Behr GmbH & Co. KG, 70469 Stuttgart (DE)
(72) Erfinder: Ghiani, Franco, 74321 Bietigheim-Bissingen (DE); Grausam, Sandra, 71093 Weil im Schönbuch (DE); Klein, Peter, 67718 Schmalenberg (DE); Kögel, Jens, 70197 Stuttgart (DE); Stilz, Otto, 71384 Weinstadt (DE); Wagner, Claudia, 70839 Gerlingen (DE); Well, Christof, 70771 Leinfelden (DE)
(74) Vertreter: Grauel, Andreas

(56) Entgegenhaltungen:
- EP-A1- 1 241 427
- EP-A2- 1 400 772
- WO-A1-00/00310
- DE-A1- 4 314 808
- DE-A1- 19 511 991
- DE-A1- 19 711 258
- DE-A1- 19 750 748
- JP-A- 6 265 289

## Beschreibung

Die Erfindung betrifft einen Stapelscheibenwärmeübertrager für einen Verbrennungsmotor nach dem Oberbegriff des Patentanspruches 1.

Wärmeübertrager, insbesondere Plattenwärmeübertrager, werden bei Kraftfahrzeugen vielfach als so genannte Stapelscheibenwärmeübertrager eingesetzt, insbesondere als Stapelscheiben-Ölkühler, wobei das Motoröl durch Kühlmittel des Kühlkreislaufes des Verbrennungsmotors gekühlt wird. Die Stapelscheibenbauweise ist aus diversen Offenlegungsschriften der Anmelderin bekannt, z. B. aus der DE-A 197 11 258, DE-A 197 50 748 und der DE-A 43 14 808. Mehrere Stapelscheiben mit einem umlaufenden Rand sind zu einem Stapel aufgeschichtet, miteinander stoffschlüssig verbunden, insbesondere verlötet, verschweißt, verklebt usw. und bilden getrennte Durchströmungsräume für mindestens ein Wärmetauschermedium, insbesondere für zwei Wärmetauschermedien, z. B. Motoröl und Kühlmittel. Der Stapel wird mit einer so genannten Grundplatte - vielfach auch unter Zwischenlage einer Verstärkungsplatte - verlötet, verschweißt, verklebt usw. wobei die Grundplatte einerseits der Befestigung des Wärmeübertragers, insbesondere des Ölkühlers, am Motorblock des Verbrennungsmotors und andererseits dem Anschluss des Wärmeübertragers, insbesondere des Ölkühlers, an den Motorölkreislauf dient. Für diese Anschlussverbindung sind sauber bearbeitete Flächen mit geringer Rautiefe erforderlich. Eine derartige Ölanschlussverbindung ist in der DE-A 197 11 258 dargestellt: dabei liegt ein O-Ring in einer Ringnut des Motorblockes und dichtet diesen im Bereich von Anschlussöffnungen gegenüber der Unterseite der Grundplatte des Stapelscheibenölkühlers ab. Voraussetzung für eine einwandfreie Abdichtung ist eine ebene und glatte Außenfläche der Grundplatte.

Beim stoffschlüssigen Verbinden des Wärmeübertragers, insbesondere beim Löten, Schweißen oder Kleben usw., eines Stapelscheiben-Ölkühlers kann es vorkommen, dass überflüssiges Prozessmedium,, insbesondere Lot durch die Anschlussöffnungen der Grundplatte aus dem Inneren des Stapelscheiben-Ölkühlers nach außen gelangt und an der Grundplatte, insbesondere deren Außenseite, insbesondere als konzentrischer Ring oder als Ellipse, haften bleibt und sich ferner auf der Vorrichtung zum Erzeugen der stoffschlüssigen Verbindung, insbesondere auf der Lötvorrichtung, mit der die Stapelscheibenwärmeübertrager gelötet werden, absetzt. Das überflüssige Prozessmedium, insbesondere das Lot, führt zu so genannten Lotausblühungen und zu Verunreinigungen bzw. Anfressungen der Oberflächen. Mit überflüssigem Prozessmedium, insbesondere mit Lot, befleckte Grundplatten müssen daher nach dem Löten nachbearbeitet oder gereinigt werden, damit man eine saubere Dichtfläche erhält. Zudem führt überflüssiges Prozessmedium, insbesondere das Lot, zu so genannten Lotausblühungen und Verunreinigungen auf den Betriebsmitteln. Dies führt zu Deformationen der Grundplatte im Bereich der Anschlussöffnungen. Die Betriebsmittel müssen neben den Grundplatten ebenfalls in einem zusätzlichen Arbeitsschritt von den Rückständen des ausgetreten Prozessmediums, insbesondere von dem Lot, befreit werden. Unter Umständen ist ein weiterer kostenintensiver Arbeitsgang erforderlich, wobei die Dichtheit der Wärmetauscher zusätzlich überprüft werden muss. Dies ist sehr zeitaufwändig und teuer.

In der DE 691 01 606 T2 ist eine Reinigungslösung für Kühlsysteme aufgeführt, die ein Nitratsalz sowie ein EDTA-Salz enthält, wobei eine wirksame Menge eines Chelatbildners aus Sorbit oder einem Salz einer oder mehrer Polyhydroxyzuckermono- oder dicarbonsäuren verwendet wird, dabei werden Lotausblühungen entfernt, ohne dass es zu einer Schwärzung oder Korrosion der Metalloberflächen kommt. In der Reinigungslösung ist ebenfalls ein Korrosionsschutzmittel, insbesondere zur Verhinderung einer Korrosion von Aluminium, enthalten. Die Behandlung des Wärmeübertragers und des Betriebsmittels mit einer derartigen Reinigungslösung müsste in einem zusätzlichen Arbeitsschritt durchgeführt werden. Darüber hinaus erfordert eine derartige Reinigung die Bereitstellung zusätzlicher Betriebsmittel.

In der WO 00/00310 ist ein Prozess zur Herstellung eines Stapelscheibenwärmeübertragers offenbart.

Es ist Aufgabe der vorliegenden Erfindung, den Stapelscheibenwärmeübertrage sowie den Löt prozess, zur Herstellung eines Plattenwärmeübertragers, insbesondere eines Stapelscheiben-Ölkühlers mit Grundplatte, zu verbessern.

Diese Aufgabe wird durch die Merkmale des Patentanspruches 1 gelöst.

Erfindungsgemäß weist der Stapelscheibenwärmeübertrager für einen Verbrennungsmotor, mehrere Platten auf, die aufeinander stapelbar sind. Benachbart zu den gestapelten Platten ist auf einer Seite mindestens eine Abdeckplatte und auf einer anderen Seite, insbesondere gegenüber der Abdeckplatte, mindestens eine Grundplatte angeordnet. In einem Löt prozess werden die Grundplatte, die gestapelten Platten und die Abdeckplatte stoffschlüssig miteinander verbunden. Die Grundplatte weist mindestens eine Öffnung mit einem ersten Durchmesser für eine Zu- und/oder Abfuhr mindestens eines Wärmeübertragungsmediums auf. Der Wärmeübertrager weist mindestens ein Reservoir für mindestens ein Prozessmedium auf. Das Prozessmedium ist überflüssiges Prozessmedium, d.h. Prozessmedium des Fügeprozesses, welches keine Bauteile benetzt und aus diesem Grund durch Anschlussöffnungen, insbesondere in der Grundplatte, an die Außenseite der Grundplatte gelangt und sich dort ablagert. Das überflüssige Prozessmedium ist beim Lötprozess Lot, ein Zusatzmetall, das schmilzt und das die zu fügenden Teile benetzt. Um alle zu lötenden Teile, derart zu fügen, dass sie gegeneinander abgedichtet sind, d.h. dass im Betrieb kein Wärmeübertragungsmedium durch die Fügestellen tritt, wird sehr viel mehr Lot beim Fügeprozess zur Verfügung gestellt als die Bauteile benetzt. Dieses restliche Lot ist überflüssiges Prozessmedium, das durch das Reservoir aufgefangen wird. Das Lot ist insbesondere auf den Platten aufgebracht und verflüssigt sich beim Überschreiten einer bestimmten Temperatur. Auf den Platten ist zum Sicherstellen der Fügeverbindungen in allen Bereichen des Wärmeübertragers sehr viel Lot, aufgebracht. Während des Fügeprozesses fließt überflüssiges Prozessmedium, insbesondere im Bereich der Austrittsöffnungen der Grundplatte, in das Reservoir, wird im Reservoir gesammelt und gelangt nicht mehr durch die Austrittsöffnungen der Grundplatte an die Außenseite der Grundplatte und an die Betriebsmittel. Zusätzliche zeitaufwändige und teuere Arbeitsgänge zur Entfemung des überflüssigen, Lots, an der Außenseite der Grundplatte und an den Betriebsmitteln sowie zusätzliche zeitaufwändige und teuere Dichtheitsprüfungen des Wärmeübertragers entfallen.

Vorteilhafte Ausgestaltungen der Erfindung ergeben sich aus den Unteransprüchen.

Im Bereich der Anschlussöffnungen in der Grundplatte auf deren Innenseite sind ringförmige Vertiefungen vorgesehen, die als Lotsperre wirken. Mit der Innen- bzw. Oberseite der Grundplatte ist die unterste Scheibe des Stapels verlötet, wobei die Außenseite der untersten Stapelscheibe mit einer Lotplattierung versehen ist, welche bei Erreichen der Löttemperatur zu fließen beginnt. Durch die erfindungsgemäße Anordnung von ringförmigen Vertiefungen um die Anschlussöffnungen herum wird das Lot am Herausfließen, d. h. in die Anschlussöffnung hinein gehindert, es sammelt sich vielmehr in mindestens einer Aussparung, d.h. in ringförmigen Vertiefungen. Damit befindet sich nach dem Lötprozess weder an der Grundplatte noch an der Lötvorrichtung, an so genannten Lötplatten Lot - man erhält also auf Anhieb auf besonders vorteilhafte Weise eine saubere Dichtfläche an der Grundplatte. Eine Nacharbeit - wie bisher - ist nicht erforderlich.

In einer weiteren Ausführung umfasst der Wärmeübertrager mindestens ein turbulenzerzeugendes Element, welches insbesondere zwischen zwei benachbarten Platten eingebracht ist und mindestens eine Turbulenzeinlagenöffnung mit einem dritten Durchmesser aufweist. In vorteilhafter Weise wird dadurch der Wärmeübergang zwischen den Wärmetauschermedien verbessert. Besonderes vorteilhaft sammelt sich überflüssiges Prozessmedium im Bereich des turbulenzerzeugenden Elements und tritt nicht durch die Austrittsöffnungen der Grundplatte aus.

Das Reservoir ist die Aussparung. In der Aussparung sammelt sich überflüssiges Prozessmedium.

In einer Weiterbildung der Erfindung ist die Aussparung umlaufend und insbesondere konzentrisch um die Öffnung der Grundplatte ausgebildet. In vorteilhafter Weise kann dadurch sehr viel überflüssiges Prozessmedium in der Aussparung gesammelt werden.

Die Aussparung ist als Nut ausgebildet, welche insbesondere eine Breite b ≥ 0,1mm, vorzugsweise insbesondere eine Breite b=1mm, aufweist. Vorteilhafterweise ist die Nut besonders einfach und kostengünstig durch ein umformendes Fertigungsverfahren, wie Prägen, Stanzen usw. und/oder durch ein abtragendes Fertigungsverfahren wie Drehen, Fräsen, Erodieren usw. herstellbar.

In einer weiteren Ausführung weist die Nut eine Tiefe t ≥ 0,05mm, insbesondere von 0,1mm bis 1,0mm, auf. Versuche haben gezeigt, dass bei diesen Werten der Nuttiefe t überflüssiges Prozessmedium besonderes vorteilhaft in der Nut gesammelt wird und nicht an die Außenseite der Grundplatte, d.h. nicht an die Seite der Grundplatte gelangt, die beispielsweise einem möglichen Antriebselement zugewandt ist.

In einer Weiterbildung der Erfindung ist die Nut rechteckförmig und/oder v-förmig und/oder u-förmig usw ausgebildet. Diese Nutformen sind besonders einfach und kostengünstig herstellbar. Insbesondere wird in Nuten mit diesen Nutformen überflüssiges Prozessmedium besonderes vorteilhaft gesammelt.

In einer vorteilhaften Weiterbildung der Erfindung schließt mindestens eine erste Nutflanke der Nut mit mindestens einer zweiten Nutflanke der Nut einen Winkel α von 10° bis 180", insbesondere von 20° bis 90°, ein. Versuche haben gezeigt, dass Nuten mit diesen Winkeln besonders vorteilhaft überflüssiges Prozessmedium sammeln. Zudem sind Nuten mit derartigen Winkeln besonders vorteilhaft und kostengünstig, insbesondere durch umformende Verfahren wie Prägen, Stanzen usw. oder durch abtragende Verfahren wie Drehen, Fräsen, Erodieren usw. herstellbar.

Der erste Durchmesser D1 ist kleiner als ein zweiter Durchmesser D2 einer Durchtrittsöffnung einer Platte, bzw. einer untersten Scheibe, und insbesondere ein erstes Durchmesserverhältnis S1 des ersten Durchmessers D1 zum zweiten Durchmesser D2 ist größer als 0,3 und insbesondere zwischen 0,7 und 0,9. Aufgrund des Durchmesserverhältnisses S1 ist der erste Durchmesser D1 der Anschlussöffnung der Grundplatte kleiner als der zweite Durchmesser D2 der Plattendurchtrittsöffnung. Auf diese Weise wird im Übergangsbereich der Durchtrittsöffnung der untersten Scheibe in die Anschlussöffnung der Grundplatte eine Stufe gebildet.

In einer vorteilhaften weiteren Ausgestaltung der Erfindung ist ein zweiter Durchmesser D2 einer Durchtrittsöffnung einer Platte, bzw. einer untersten Scheibe, kleiner als ein dritter Durchmesser D3 einer Turbulenzeinlagenöffnung eines turbulenzerzeugenden Elements, und insbesondere ist ein zweites Durchmesserverhältnis S2 des zweiten Durchmessers D2 zum dritten Durchmesser D3 kleiner als 1 und, insbesondere zwischen 0,9 und 0,5. Auf diese Weise wird besonders vorteilhaft im Übergangsbereich der Turbulenzeinlagenöffnung des turbulenzerzeugenden Elements in die Plattendurchtrittsöffnung der eine Stufe gebildet, in der sich überflüssiges Prozessmedium sammelt und nicht durch die Anschlussöffnung der Grundplatte nach außen tritt. Zusätzlich sammelt sich in mindestens einem Bereich um die Turbulenzeinlagenöffnung des turbulenzerzeugenden Elements überflüssiges Prozessmedium in vorteilhafter Weise. Die Stufe, welche insbesondere umlaufend ausgebildet ist, ist ein Reservoir.

Erfindungsgemäß weist der Wärmeübertrager mindestens eine Grundplatte mit mindestens einer Randfläche auf, die mit mindestens einer Bodenfläche der Grundplatte einen Winkel β einschließt, wobei der Winkel β zwischen 0° und 150° und insbesondere zwischen 90° und 140° und insbesondere 110° ist. Auf besonders vorteilhafter Weise ist die Funktionalität einer Verstärkungsscheibe, die insbesondere benachbart zur Grundplatte angeordnet ist, in die Grundplatte integriert, wodurch die Verstärkungsscheibe entfällt und der Wärmeübertrager kostengünstiger herstellbar ist. Die Bodefläche der Grundplatte und die Randfläche der Grundplatte sind besonders vorteilhaft stoffschlüssig, insbesondere durch Löten, Schweißen, Kleben usw., mit einer der Grundplatte benachbarten Platte verbindbar.

In einer weiteren vorteilhaften Ausgestaltung der Erfindung sind ringförmige Vertiefungen konzentrisch zu den Anschlussöffnungen angeordnet.

In einer Weiterbildung der Erfindung sind die Vertiefungen als Ringnuten in die Grundplatte eingeschnitten.

In einer weiteren vorteilhaften Ausführung sind die Vertiefungen in die Grundplatte eingeprägt.

In einer vorteilhaften Weiterbildung weisen die Vertiefungen eine Tiefe t im Bereich von 0,5 mm auf.

In einer vorteilhaften Ausbildung der Erfindung weisen die Vertiefungen eine Breite b im Bereich von 1 mm auf.

Die Durchtrittsöffnung der untersten Scheibe oder Platte weist einen Durchmesser D2 auf, der größer als der Innendurchmesser der Ringnute ist.

Das Reservoir des Wärmeübertragers wird besonders vorteilhaft durch ein umformendes Fertigungsverfahren wie Stanzen, Prägen usw. eingebracht. Mit einem derartigen Verfahren ist das Reservoir besonders vorteilhaft und kostengünstig herstellbar.

Auf besonders vorteilhafte Weise wird das Reservoir des Wärmeübertragers durch ein abtragendes Fertigungsverfahren wie Fräsen, Bohren, Drehen, Erodieren usw. eingebracht. Mit einem derartigen Verfahren ist das Reservoir besonders vorteilhaft und kostengünstig herstellbar.

Der Wärmeübertrager wird durch ein Verfahren derart hergestellt, dass beim Fügen der Platten mit der Grundplatte und der Abdeckptatte, d.h. beim Löten das überflüssige Prozessmedium, insbesondere jedes überflüssige Prozessmedium, im Reservoir gesammelt wird.

Weitere vorteilhafte Ausgestaltungen der Erfindung ergeben sich aus den Unteransprüchen. Danach sind die ringförmigen Vertiefungen konzentrisch zu den Anschlussöffnungen angeordnet und werden vorzugsweise beim Stanzen der Anschlussöffnungen durch Prägen, also spanlos in die Grundplatte eingebracht. Vorzugsweise liegen die Tiefe der ringförmigen Vertiefung im Bereich von 0,5 mm und deren Breite im Bereich von 1 mm. Der Querschnitt der ringförmigen Vertiefung kann beliebig sein, z. B. rechteckförmig, dreieckförmig, halbkreisförmig etc. Der Innendurchmesser D2 der Öffnung in der untersten Scheibe ist größer als der Innendurchmesser der Ringnut, so dass die Kante bzw. der Umfang der Öffnung über der Ringnut, d. h. innerhalb der Ringnutbreite b liegen. Damit ist sichergestellt, dass sich herausfließendes, überschüssiges Lot in der Ringnut sammelt.

Ein Ausführungsbeispiel der Erfindung ist in der Zeichnung dargestellt und wird im Folgenden näher beschrieben. Es zeigen
- Fig. 1: eine Explosionsansicht eines Wärmeübertragers,
- Fig. 2: eine Explosionsansicht eines Wärmeübertragers,
- Fig. 3: eine Grundplatte für einen Stapelscheiben-Ölkühler in einer Ansicht von oben,
- Fig. 4: einen Schnitt durch die Grundplatte gemäß der Linie II-II in Fig. 3.
- Fig. 5: eine Ansicht auf die Grundplatte von unten,
- Fig. 6: einen Teilschnitt gemäß der Linie IV-IV in Fig. 5,
- Fig. 7: eine isometrische Darstellung einer Grundplatte,
- Fig. 8: einen Teilschnitt gemäß der Linie IV-IV in Fig. 5,
- Fig. 9: einen Teilschnitt gemäß der Linie IV-IV in Fig. 5,
- Fig. 10: einen Teilschnitt gemäß der Linie IV-IV in Fig. 5,
- Fig. 11: einen Teilschnitt gemäß der Linie IV-IV in Fig. 5 der nicht Teil der vorligenden Erfindung ist und
- Fig. 12: einen Teilschnitt gemäß der Linie IV-IV in Fig. 5 der nicht Teil der vorligenden Erfindung ist.

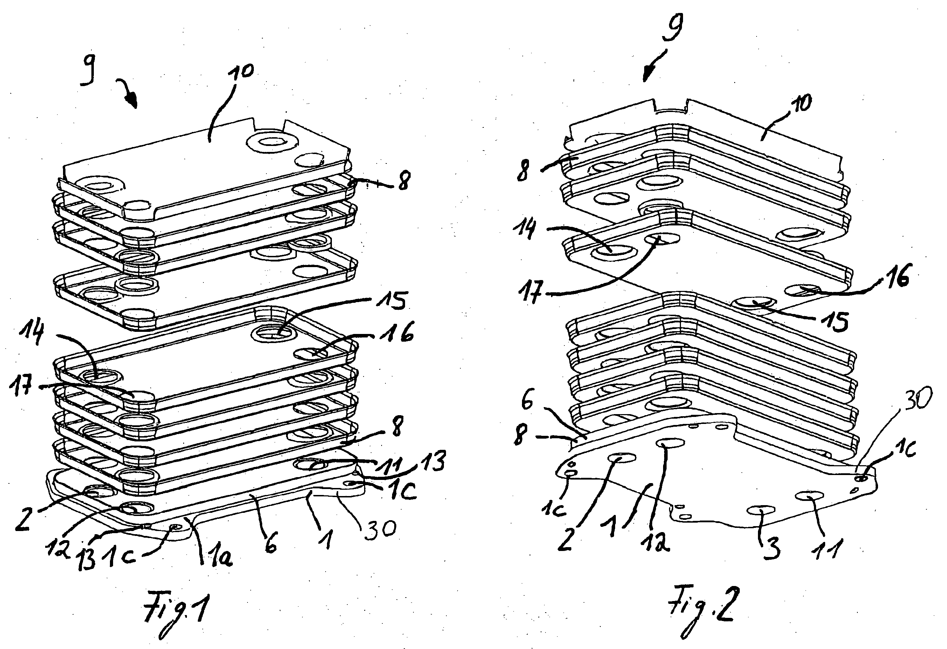

Fig. 1 zeigt eine Explosionsansicht eines Wärmeübertragers 9. Der Wärmeübertrager 9 weist mindestens eine Platte 8, mindestens eine Grundplatte 1 und mindestens eine Abdeckplatte 10 auf. Auf der Grundplatte 1 sind mehrere Platten 8 zu einem Stapel aufeinander gestapelt. Die Abdeckplatte 10 bildet die oberste Platte. Die unterste Scheibe 6 ist benachbart zur Grundplatte 1 angeordnet und ist im gezeigten Ausführungsbeispiel als Verstärkungsscheibe ausgebildet. Die Verstärkungsscheibe weist im Vergleich zu einer Platte 8 ein dickeres Material auf. Dies soll insbesondere bei Wärmeübertragern mit großen Wärmetauscherleistungen und bei großen Massenströmen die mechanische Stabilität des Wärmetauschers gewährleisten. Die Verstärkungsscheibe ist in einer anderen nicht dargestellten Ausführung durch eine Platte 8 ersetzt. Diese Ausführungsform kommt insbesondere bei Wärmeübertragern mit geringeren Wärmetauscherleistungen und/oder mit geringeren Massenströmen zum Einsatz. In einer weiteren nicht dargestellten Ausführung ist bei Wärmeübertragern 1 mit größeren Wärmetauscherleistungen und/oder mit größeren Massenströmen die Funktionalität der Verstärkungsscheibe in die Grundplatte 1 integriert, so dass eine Verstärkungsscheibe nicht erforderlich ist. Die Grundplatte 1 ist im Wesentlichen wie eine Platte 8 ausgebildet, weist aber ein dickeres Material auf. Zusätzlich sind Befestigungsbohrungen zur Befestigung des Wärmeübertragers beispielsweise an einem nicht dargestellten Antriebselement vorgesehen.

Die Grundplatte 1 weist eine erste Anschlussöffnung 2, eine nicht dargestellte zweite Anschlussöffnung 3, eine dritte Anschlussöffnung 11 und eine vierte Anschlussöffnung' 12 auf. In einer anderen Ausführungsform weist die Grundplatte 1 keine Anschlussöffnungen auf. Bei dieser Ausführung weist die Abdeckplatte 10 die Anschlussöffnungen 2, 3, 11, 12 auf. Ferner weist die Grundplatte 1 auf der Oberseite 1a mindestens einen Vorsprung 13, insbesondere vier Vorsprünge 13, zur genauen Positionierung der der Grundplatte 1 benachbarten Platte 6, 8 auf. In der Grundplatte 1 ist mindestens eine Befestigungsbohrung 1c eingebracht, insbesondere sind vier Befestigungsbohrungen 1c eingebracht, womit die Grundplatte 1 beispeislweise an einem nicht dargestellten Antriebselement mit nicht dargestellten Befestigungselementen befestigbar ist.

Die Platte 8 weist eine erste Plattendurchtrittsöffnung 14, eine zweite Plattendurchtrittsöffnung 15, eine dritte Plattendurchtrittsöffnung 16 und eine vierte Plattendurchtrittsöffnung 17 auf.

Fig. 2 zeigt eine andere Explosionsansicht eines Wärmeübertragers 9 mit Blick auf die dem Plattenstapel abgewandten Seite der Grundplatte 1. Gleiche Merkmale sind mit den gleichen Bezugszeichen wie in Figur 1 bezeichnet.

Die Grundplatte 1 weist eine erste Anschlussöffnung 2, eine zweite Anschlussöffnung 3, eine dritte Anschlussöffnung 11 und eine vierte Anschlüssöffnung 12 auf. Die Grundplatte 1 ist derart ausgebildet, dass aus einem im Wesentlichen rechteckförmigen Grundkörper Zungenelemente 30 ausgebildet sind. In die Zungenelemente 30 ist jeweils eine Befestigungsbohrung 1c eingebracht.
In anderen nicht dargestellten Ausführungsformen sind weniger oder mehr als vier Zungenelemente 30 ausgebildet.

Die Abdeckplatte 10 weist im dargestellten Ausführungsbeispiel Prägungen auf, die jedoch keine Öffnungen sind. In einem anderen nicht dargestellten Ausführungsbeispiel, insbesondere bei einem Wärmetauscher mit einer Grundplatte ohne die Anschlussöffnungen 2, 3, 11, 12, sind die Anschlussöffnungen 2, 3, 11, 12 in die Abdeckplatte eingebracht. In einer anderen nicht dargestellten Ausführungsform weist der Wärmetauscher eine Abdeckplatte mit den Anschlussöffnungen 2, 3, 11, 12 auf. Darüber hinaus sind auch in der Grundplatte 1 die Anschlussöffnungen 2, 3, 11, 12 eingebracht.

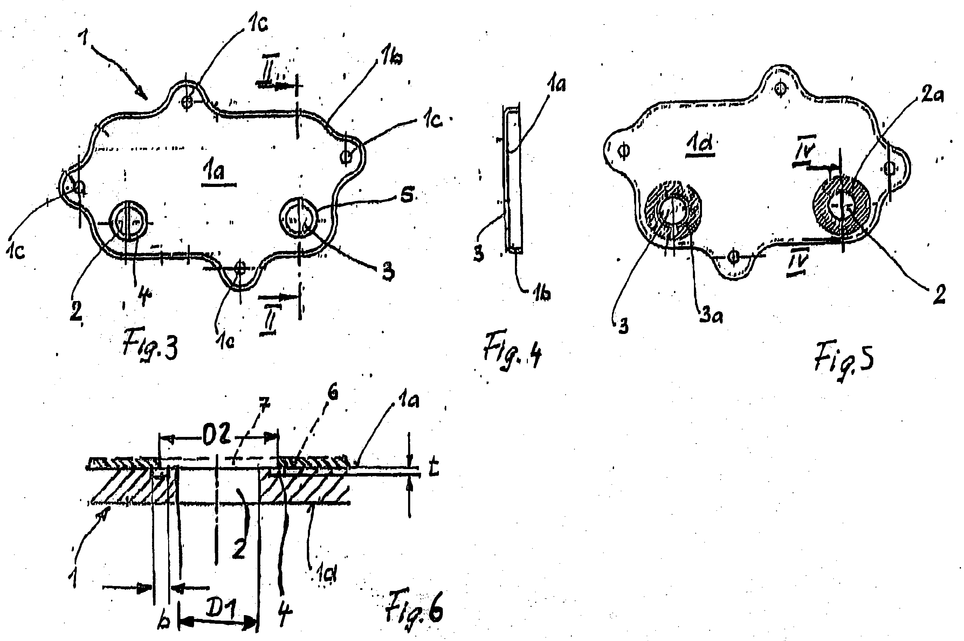

Fig. 3 zeigt eine Grundplatte 1 für einen nicht dargestellten Stapelscheiben-Ölkühler, wie er beispielsweise aus der eingangs genannten DE-A 197 11 258 bekannt ist. Ein solcher Stapelscheiben-Ölkühler dient der Kühlung von Motoröl eines Verbrennungsmotors eines Kraftfahrzeuges, wobei zur Kühlung das Kühlmittel des Kühlkreislaufes des Verbrennungsmotors herangezogen wird. Die Grundplatte 1 ist einstückig aus einer Blechplatine geformt: sie weist eine ebene Oberseite 1a, einen aufgestellten umlaufenden Rand 1 b, verschiedene Befestigungsbohrungen 1 c sowie zwei ausgestanzte Anschlussöffnungen 2, 3 auf. Letztere fluchten mit nicht dargestellten Durchtrittsöffnungen des Stapelscheiben-Ölkühlers und dienen der Ölzufuhr aus dem Motorölkreislauf in den Stapelscheiben-Ölkühler und dem Ölrücklauf aus dem Stapelscheiben-Ölkühler in den Motorölkreislauf. Die Grundplatte 1 wird - wie prinzipiell ebenfalls aus der vorgenannten DE-A 197 11 258 bekannt - mit einem nicht dargestellten Motorblock verbunden, wobei der Bereich um die Durchtrittsöffnungen 2, 3 herum abgedichtet ist. Konzentrisch zu den Anschlussöffnungen 2, 3 sind in die Oberseite 1 a Ringnuten 4, 5 eingearbeitet, auf die in der Beschreibung zu Fig. 6 näher eingegangen wird.

Fig. 4 zeigt einen Schnitt entlang der Linie II-II durch die Grundplatte 1 und die Anschlussöffnung 3. Der aufgestellte Rand 1 b dient im Wesentlichen der Versteifung der Grundplatte 1.

Fig. 5 zeigt die Grundplatte 1 in einer Ansicht von unten, wobei um die Anschlussöffnungen 2, 3 Dichtungsbereiche 2a, 3a als kreisringförmige Flächen schraffiert eingezeichnet sind. Diese Dichtungsbereiche 2a, 3a liegen auf entsprechenden nicht dargestellten Dichtungsflächen des nicht dargestellten Motorblockes auf und werden jeweils durch ein ebenfalls nicht dargestelltes geeignetes Dichtmittel, z. B. einen O-Ring abgedichtet. Diese Flächen müssen daher besonders glatt und eben ausgebildet sein, d. h. sie sollen auch eine möglichst geringe Rauhtiefe aufweisen.

Fig. 6 zeigt einen Teilschnitt IV-IV durch die Anschlussöffnung 2 in der Grundplatte 1, und zwar in vergrößerter Darstellung. Die Grundplatte 1 ist nur teilweise im Bereich der Anschlussöffnung 2 dargestellt, wobei die Oberseite 1 a in der Zeichnung oben und die Unterseite 1d in der Zeichnung unten dargestellt sind. Auf der Oberseite 1a liegt eine gestrichelt dargestellte Platte 6 mit einer Durchtrittsöffnung 7 des Durchmessers D2 auf, so dass die Durchtrittsöffnung 7 mit der Anschlussöffnung 2 fluchtet. Die Platte 6 stellt die unterste Scheibe des nicht dargestellten Stapelscheiben-Ölkühlers dar, welcher über diese Platte 6 mit der Grundplatte 1 verlötet wird; die Platte 6 ist aus einem Aluminiumblech hergestellt und mit einer beiderseitigen nicht dargestellten Lotplattierung versehen. Die Platte 6 kann auch eine verstärkte Stapelscheibe (so genannte Verstärkungsplatte gemäß Stand der Technik) oder ein Einlegeteil sein. Koaxial zu der Anschlussöffnung 2 ist auf der Oberseite 1a der Grundplatte 1 die Ringnut 4 angeordnet, welche eine Tiefe t und eine Breite b aufweist. Der Durchmesser D2 der Durchtrittsöffnung 7 ist größer als der Durchmesser der Anschlussöffnung 2 und größer als der Innendurchmesser der Ringnut 4, so dass der Umfang der Durchtrittsöffnung 7 innerhalb der Nutbreite b liegt. Durch diese Abstimmung der beiden Platten 1, 6 wirkt die Ringnut 4 - und ebenso die in Fig. 3 dargestellte Ringnut 5 als Lotsperre während des Lötprozesses und verhindert, dass Lot in die Anschlussöffnung 2 bzw. 3 fließt und sich auf nicht dargestellten Lötplatten absetzt, welche der Halterung des Stapelscheiben-Ölkühlers während des Lötprozesses in einem nicht dargestellten Lötofen dienen. Das Lot, welches durch Schmelzen der Lotplattierung fließt, sammelt sich in der Ringnut 4 und tritt daher nicht in die Anschlussöffnung 2. Die Grundplatte 1, insbesondere ihre für die Dichtung gegenüber dem Motorblock vorgesehene Unterseite 1d bleibt somit frei von korrosiven Lotrückständen, die bekanntlich die Oberfläche anfressen oder zu Unebenheiten führen. Die bevorzugte Tiefe t der Ringnuten 4, 5 beträgt etwa 0,5 mm und die Breite b etwa 1 mm. Die Ringnuten 4, 5 können durch spanlose Umformung beim Stanzen der Anschlussöffnungen 2, 3 in die Oberseite 1a der Grundplatte 1 eingeprägt werden. Das Material der Grundplatte 1 sowie des gesamten Stapelscheiben-Ölkühlers ist Aluminium bzw. eine Aluminiumlegierung.

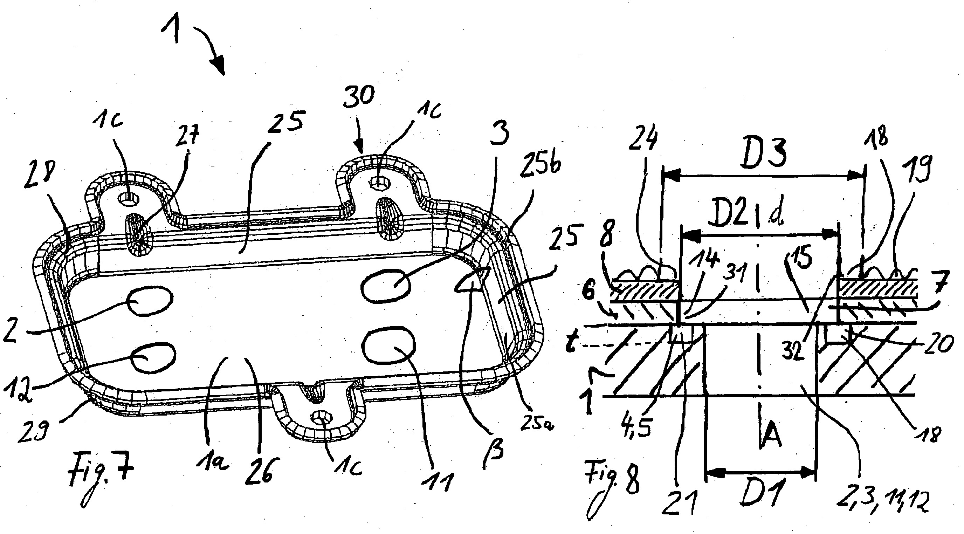

Fig. 7 zeigt eine isometrische Darstellung einer Grundplatte 1. Gleiche Merkmale sind mit den gleichen Bezugszeichen wie in den vorhergehenden Figuren bezeichnet. Die Grundplatte 1 ist schalenförmig ausgebildet und weist eine Bodenfläche 26 mit einer Oberseite 1 a auf, wobei die Bodenfläche 26 im Wesentlichen rechteckförmig ausgebildet ist und abgerundete Ecken aufweist. An die Bodenfläche 26 schließt sich eine Randfläche 25 an, die im Wesentlichen umlaufend ausgebildet ist und die einen Winkel ß zwischen 0° und 150°, und insbesondere zwischen 90° und 140°, mit der Bodenfläche 26 einschließt. Besonders vorteilhaft ist ein Winkel ß von 110°. Die Bodenfläche 26 weist eine erste Anschlussöffnung 2, eine zweite Anschlussöffnung 3, eine dritte Anschlussöffnung 11 und eine vierte Anschlussöffnung 12 auf. In einer anderen nicht dargestellten Ausführungsform weist die Bodenfläche 26 weniger oder mehr als vier Anschlussöffnungen oder keine Anschlussöffnungen auf. Die Randfläche 25 weist mindestens eine Bördelung 28 auf, die rinnenförmig ausgebildet ist und die zur Festigkeitssteigerung, insbesondere umlaufend, in die Außenseite 29 der Randfläche 25 eingebracht ist. Die Bördelung 28 unterteilt die Randfläche 25 in eine erste Teilrandfläche 25a und in eine andere zweite Teilrandfläche 25b, wobei die Teilrandfläche 25a benachbart zur Bodenfläche 26 angeordnet ist. Die erste Teilrandfläche 25a und die zweite Teilrandfläche 25b schließen jeweils den Winkel ß zwischen 0° und 150°, und insbesondere zwischen 90° und 140°, mit der Bodenfläche 26 ein. Besonders vorteilhaft ist ein Winkel ß von 110°. In einer anderen nicht dargestellten Ausführungsform schließt die erste Teilrandfläche 25a einen anderen Winkel ß mit der der Bodenfläche 26 ein als die zweite Teilrandfläche 25b mit der Bodenfläche 26 einschließt. Der Winkel ß ist bei dieser Ausführung zwischen 0° und 150°, und insbesondere zwischen 90° und 140°. Aus der Grundscheibe 1 sind drei Zungenelemente 30 ausgebildet. Die Zungenelemente 30 sind mit der Randfläche 25 verbunden und im Wesentlichen parallel zur Bodenfläche 26 angeordnet. Zur Festigkeitssteigerung weisen die Zungenelemente eine Bördelung auf, wobei es sich insbesondere um die Bördelung 28 handelt. Im Übergangsbereich jeweils eines Zungenelements 30 in die Randfläche 25 ist eine muldenförmige Prägung 27 zur Festigkeitssteigerung eingebracht. Die Zungenelemente 30 weisen eine Befestigungsbohrung 1c, insbesondere zur Befestigung der Grundplatte 1 des Wärmeübertragers 9 an einem nicht dargestellten Antriebselement oder an einem nicht dargestellten Wärmetauschermodul oder an einem nicht dargestellten Radkasten auf. In einer nicht dargestellten Ausführungsform weist die Grundplatte 1 mehr als drei Zungenelemente oder weniger als drei Zungenelemente auf. In einer anderen nicht dargestellten Ausführungsform weist das mindestens eine Zungenelement 30 keine Bördelung 28 und/oder keine Prägung 27 auf.

Fig. 8 zeigt einen Teilschnitt gemäß der Linie IV-IV in Fig. 5. Gleiche Merkmale sind mit den gleichen Bezugszeichen wie in den vorhergehenden Figuren bezeichnet. Benachbart zu der Grundplatte 1 ist eine unterste Scheibe 6 im Wesentlichen parallel angeordnet. Benachbart zur der untersten Scheibe 6 ist eine Platte 8 im Wesentlichen parallel angeordnet. Benachbart zu der Platte 8 ist ein turbulenzerzeugendes Element 19 angeordnet. Die Grundplatte 1, die untere Scheibe 6, die Platte 8 und das turbulenzerzeugende Element sind stoffschlüssig, insbesondere durch Löten, Schweißen, Kleben usw., miteinander verbunden.
Die Grundplatte 1 weist eine Anschlussoffnung 2, 3, 11, 12 mit einem ersten Durchmesser D1 auf und ist im Wesentlichen koaxial zu einer Achse A ausgerichtet. Das Reservoir 18 ist im Wesentlichen koaxial zur Achse A angeordnet und als Nut 4, 5, 21; ausgebildet. Die Nut weist eine Tiefe t auf, wobei insbesondere die Tiefe t ≥ 0,05mm und insbesondere zwischen 0,1mm und 1,0mm ist. Die Nut ist rechteckförmig oder u-förmig oder v-förmig ausgebildet. Das Reservoir 18, d.h. die Nut 4, 5, 21 ist mit der Plattendurchtrittsöffnung 14, 15 verbunden. Die unterste Scheibe 6 und die Platte 8 weisen eine Plattendurchtrittsöffnung 14, 15 mit einem zweiten Durchmesser D2 auf. Im gezeigten Ausführungsbeispiel ist der zweite Durchmesser D2 der Durchmesser d der Durchtrittsöffnung 7 der Platte 8. In einem anderen nicht dargestellten Ausführungsbeispiel, das nicht Teil der vorliegenden Erfindung ist, ist der Durchmesser d der Durchtrittsöffnung 7 der Platte 8 ein anderer Durchmesser als der zweite Durchmesser D2, insbesondere ist der Durchmesser D2 kleiner als der Durchmesser d. Das turbulenzerzeugende Element 19 weist eine Turbulenzeinlagenöffnung 24 mit einem dritten Durchmesser D3 auf. Der Durchmesser D3 ist ein anderer Durchmesser als der Durchmesser D2. Insbesondere ist der Durchmesser D2 kleiner als der Durchmesser D3. In einem anderen nicht dargestellten Ausführungsbeispiel ist der Durchmesser D2 der Durchmesser D3. Ein erstes Durchmesserverhältnis S1 des ersten Durchmessers D1 zum zweiten Durchmesser D2 ist größer als 0,3 und insbesondere zwischen 0,7 und 0,9. Aufgrund dieses ersten Durchmesserverhältnisses S1 ist zwischen der Grundplatte 1 und der untersten Scheibe 6 bzw. der Platte 8 eine erste Stufe 31, insbesondere umlaufend, ausgebildet. Die erste Stufe 31 ist ein Reservoir 18.
Ein zweites Durchmesserverhältnis S2 des zweiten Durchmessers D2 zum dritten Durchmesser D3 ist kleiner als 1 ist und insbesondere zwischen 0,9 und 0,5. Aufgrund dieses zweiten Durchmesserverhältnisses S2 ist zwischen der untersten Scheibe 6 bzw. zwischen der Platte 8 und dem turbulenzerzeugenden Element 19 eine zweite Stufe 32, insbesondere umlaufend, ausgebildet. Die zweite Stufe 32 ist ein anderes Reservoir 18.

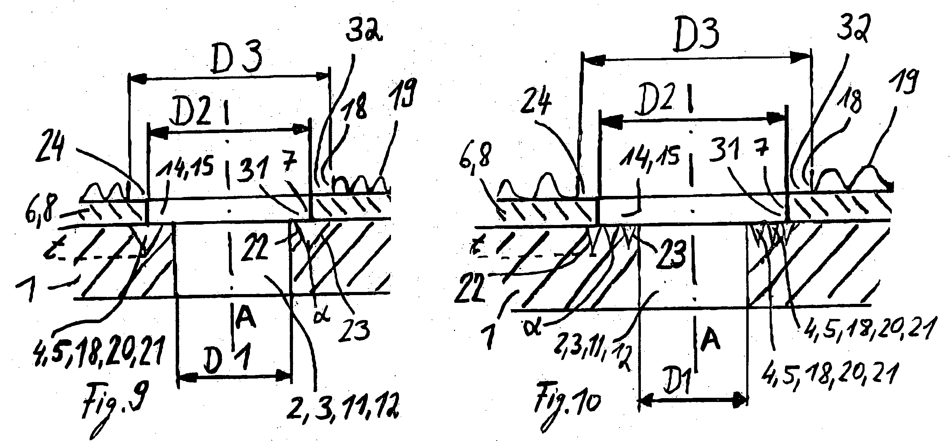

Fig. 9 zeigt einen Teilschnitt gemäß der Linie IV-IV in Fig. 5. Gleiche Merkmale sind mit den gleichen Bezugszeichen wie in den vorhergehenden Figuren bezeichnet. Im Unterschied zu Figur 8 ist die Funktion einer Verstärkungsscheibe 6 in die Grundplatte 1 integriert. Ebenso entfallen eine Verstärkungsscheibe und/oder deren Funktionsintegration in die Grundplatte 1 bei Wärmeübertragern 9 mit geringen Wärmetauscherleistungen und/oder mit geringen Masseströmen. Die der Grundplatte 1 benachbarte unterste Scheibe 6 ist demnach die Platte 8. Das Reservoir 18 und/oder die Aussparung 20 und/oder die Nut 21 sind v-förmig und insbesondere umlaufend, ausgebildet. Die Nut weist mindestens eine erste Nutflanke 22 und mindestens eine zweite Nutflanke 23 auf. Die erste Nutflanke schließt mit der zweiten Nutflanke einen Winkel α ein. Der Winkel α ist zwischen 10° und 180°, insbesondere zwischen 20° und 90°.

Fig. 10 zeigt einen Teilschnitt gemäß der Linie IV-IV in Fig. 5. Gleiche Merkmale sind mit den gleichen Bezugszeichen wie in den vorhergehenden Figuren bezeichnet. Im Unterschied zu Figur 9 sind drei Aussparungen 20 und/oder drei Nuten 21, insbesondere umlaufend und konzentrisch zu einander und zur Achse A angeordnet. In einer nicht dargestellten Ausführungsform sind mehr als drei Aussparungen 20 bzw. Nuten 21 oder weniger als drei Aussparungen 20 bzw. Nuten 21 in die Grundplatte 1 eingebracht.

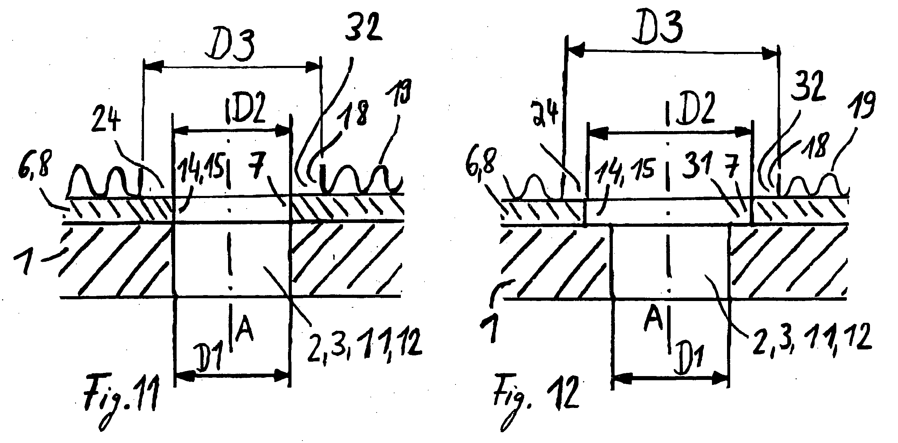

Fig. 11 zeigt einen Teilschnitt gemäß der Linie IV-IV in Fig. 5 der nicht Teil der vorliegenden Erfindung ist. Gleiche Merkmale sind mit den gleichen Bezugszeichen wie in den vorhergehenden Figuren bezeichnet. Im Unterschied zu den Figuren 8, 9, 10 weist die Grundplatte 1 keine Aussparung 20 und keine Nut 21 auf. Das Reservoir 18 ist die zweite Stufe 32. Der erste Durchmesser D1 ist der zweite Durchmesser D2.

Fig. 12 zeigt einen Teilschnitt gemäß der Linie IV-IV in Fig. 5 der nicht Teil der vorliegenden Erfindung ist. Gleiche Merkmale sind mit den gleichen Bezugszeichen wie in den vorhergehenden Figuren bezeichnet. Im Unterschied zu den Figuren 8, 9, 10 weist die Grundplatte 1 keine Aussparung 20 und keine Nut 21 auf. Ein erstes Reservoir 18 ist die erste Stufe 31. Ein anderes zweites Reservoir 18 ist die zweite Stufe 32.

Die Merkmale der verschiedenen Ausführungsbeispiele sind beliebig miteinander kombinierbar. Die Erfindung ist auch für andere als die gezeigten Gebiete einsetzbar.

## Patentansprüche

1. Stapelscheibenwärmeübertrager für einen Verbrennungsmotor, bestehend aus einem Stapel aufeinander gestapelter und miteinander verlöteter Platten, welche Durchtrittsöffnungen (14, 15, 16, 17) mit einem zweiten Durchmesser (D2) für eine Zu- und/oder Abfuhr für ein erstes und ein zweites Wärmeübertragungsmedium aufweisen, wobei die unterste Scheibe (6) des Stapels mit einer Grundplatte (1) verlötet ist und die unterste Scheibe (6) mindestens eine Durchtrittsöffnung (7) mit dem zweiten Durchmesser (D2) aufweist, wobei die Durchtrittsöffnungen (7) mit Anschlussöffnungen (2, 3, 11, 12) der Grundplatte mit einem ersten Durchmesser (D1) fluchten, mit mindestens einer Abdeckplatte (10), wobei der Stapelscheibenwärmeübertrager mindestens ein Auffangreservoir (18) für überflüssiges Lot aufweist, wobei im Bereich der Anschlussöffnungen (2, 3, 11, 12) mindestens eine als Ringnut (4, 5) ausgebildete ringförmige Vertiefung als das mindestens eine Auffangreservoir für überflüssiges Lot, auf der dem Stapel zugewandten Seite (1a) der Grundplatte (1) angeordnet ist, wobei der zweite Durchmesser (D2) der Durchtrittsöffnung (7) größer ist als der zerste Durchmesser (D1) der Anschlussöffnung (2) und größer ist als ein Innendurchmesser der Ringnut (4, 5), so dass der Umfang der Durchtrittsöffnung (7) innerhalb der Nutbreite (b) der Ringnut (4, 5) liegt.

2. Stapelscheibenwärmeübertrager nach Anspruch 1, **dadurch gekennzeichnet, dass** der Stapelscheibenwärmeübertrager (9) mindestens ein turbulenzerzeugendes Element (19) aufweist, welches insbesondere zwischen zwei benachbarten Platten (6, 8) eingebracht ist und mindestens eine Turbulenzeinlagenöffnung (24) mit einem dritten Durchmesser (D3) aufweist.

3. Stapelscheibenwärmeübertrager nach einem der Ansprüche 1 bis 2, **dadurch gekennzeichnet, dass** die Ringnut (4, 5) umlaufend und insbesondere konzentrisch um die Anschlussöffnung (2, 3, 11, 12) der Grundplatte (1), ausgebildet ist.

4. Stapelscheibenwärmeübertrager nach einem der Ansprüche 1 bis 3, **dadurch gekennzeichnet, dass** die Ringnut (4, 5) eine Breite b ≥ 0,1 mm, insbesondere eine Breite b=1 mm, aufweist.

5. Stapelscheibenwärmeübertrager nach Anspruch 4, **dadurch gekennzeichnet, dass** die Ringnut (4, 5) eine Tiefe t ≥ 0,05mm, insbesondere von 0,1 mm bis 1,0mm, aufweist.

6. Stapelscheibenwärmeübertrager nach einem der Ansprüche 4 oder 5, **dadurch gekennzeichnet, dass** die Ringnut (4, 5) rechteckförmig und/oder v-förmig und/oder u-förmig usw. ausgebildet ist.

7. Stapelscheibenwärmeübertrager nach einem der Ansprüche 4 bis 6, **dadurch gekennzeichnet, dass** mindestens eine erste Nutflanke (22) der Ringnut (4, 5) mit mindestens einer zweiten Nutflanke (23) der Ringnut (4, 5) einen Winkel α von 10° bis 180°, insbesondere von 20° bis 90°, einschließt.

8. Stapelscheibenwärmeübertrager nach einem der Ansprüche 1 bis 7, **dadurch gekennzeichnet, dass** ein erstes Durchmesserverhältnis (S1 des ersten Durchmessers (D1) zum zweiten Durchmesser (D2) größer als 0,3 ist und insbesondere zwischen 0,7 und 0,9 ist.

9. Stapelscheibenwärneübertrager nach einem der Ansprüche 1 bis 8, **dadurch gekennzeichnet, dass** der zweite Durchmesser (D2) einer Durchtrittsöffnung (7) einer untersten Scheibe (6), kleiner als ein dritter Durchmesser (D3) einer Turbulenzeinlagenöffnung (24) eines turbulenzerzeugenden Elements (19) ist, und dass insbesondere ein zweites Durchmesserverhältnis (S2) des zweiten Durchmessers (D2) zum dritten Durchmesser (D3) kleiner als 1 ist und insbesondere zwischen 0,9 und 0,5 ist.

10. Stapelscheibenwärneübertrager nach einem der Ansprüche 1 bis 9, **dadurch gekennzeichnet, dass** die Grundplatte (1) mindestens eine Randfläche (25) aufweist, die mit einer Bodenfläche (26) der Grundplatte (1) einen Winkel β einschließt, wobei der Winkel β zwischen 0° und 150°, insbesondere zwischen 90° und 140° und insbesondere 110° ist.

## Claims

1. A stacked-plate heat exchanger for an internal combustion engine, consisting of a stack of plates which are stacked on top of each other and soldered to each other and have passage openings (14, 15, 16, 17) with a second diameter (D2) for an inlet and/or outlet for a first and a second heat exchange medium, wherein the lowermost disc (6) of the stack is soldered to a base plate (1) and the lowermost disc (6) has at least one passage opening (7) with the second diameter (D2), wherein the passage openings (7) are aligned with connection openings (2, 3, 11, 12) of the base plate with a first diameter (D1), with at least one cover plate (10), wherein the stacked-plate heat exchanger has at least one collection reservoir (18) for excess solder, wherein at least one annular recess formed as an annular groove (4, 5) is arranged as the at least one collection reservoir for excess solder on the side (1a) of the base plate (1) facing the stack in the area of the connection openings (2, 3, 11, 12), wherein the second diameter (D2) of the passage opening (7) is greater than the first diameter (D1) of the connection opening (2) and is greater than an inner diameter of the annular groove (4, 5), so that the circumference of the passage opening (7) is within the groove width (b) of the annular groove (4, 5).

2. The stacked-plate heat exchanger as claimed in claim 1, **characterised in that** the stacked-plate heat exchanger (9) has at least one turbulence-generating element (19) which is in particular inserted between two adjacent plates (6, 8) and has at least one turbulence insert opening (24) having a third diameter (D3).

3. The stacked-plate heat exchanger as claimed in one of claims 1 to 2, **characterised in that** the annular groove (4, 5) is formed circumferentially and in particular concentrically around the connection opening (2, 3, 11, 12) of the base plate (1).

4. The stacked-plate heat exchanger as claimed in one of claims 1 to 3, **characterised in that** the annular groove (4, 5) has a width b≥0.1mm, in particular a width b=1mm.

5. The stacked-plate heat exchanger as claimed in claim 4, **characterised in that** the annular groove (4, 5) has a depth t≥0.05mm, in particular from 0.1mm to 1.0mm.

6. The stacked-plate heat exchanger as claimed in one of claims 4 or 5, **characterised in that** the annular groove (4, 5) has a rectangular shape and/or is v-shaped and/or u-shaped etc.

7. The stacked-plate heat exchanger as claimed in one of claims 4 to 6, **characterised in that** at least one first groove flank (22) of the annular groove (4, 5) forms an angle α from 10° to 180°, in particular from 20° to 90°, with at least one second groove flank (23) of the annular groove (4, 5).

8. The stacked-plate heat exchanger as claimed in one of claims 1 to 7, **characterised in that** a first diameter ratio (S1) of the first diameter (D1) to the second diameter (D2) is greater than 0.3 and is in particular between 0.7 and 0.9.

9. The stacked-plate heat exchanger as claimed in one of claims 1 to 8, **characterised in that** the second diameter (D2) of a passage opening (7) of a lowermost disc (6) is smaller than a third diameter (D3) of a turbulence inlet opening (24) of a turbulence-generating element (19), and that in particular a second diameter ratio (S2) of the second diameter (D2) to the third diameter (D3) is smaller than 1 and is in particular between 0.9 and 0.5.

10. The stacked-plate heat exchanger as claimed in one of claims 1 to 9, **characterised in that** the base plate (1) has at least one edge surface (25) which forms an angle β with a ground surface (26) of the base plate (1), wherein the angle β is between 0° and 150°, in particular between 90° and 140° and in particular 110°.

## Revendications

1. Echangeur de chaleur à plaques empilées pour un moteur à combustion interne, se composant d'une pile de plaques empilées les unes sur les autres et brasées les unes avec les autres, plaques qui présentent des ouvertures de passage (14, 15, 16, 17) ayant un deuxième diamètre (D2) et prévues pour une alimentation et / ou une évacuation pour un premier et un deuxième milieu de transmission de chaleur, où la plaque (6) placée tout en bas de la pile est brasée avec une plaque de base (1), et la plaque (6) placée tout en bas présente au moins une ouverture de passage (7) ayant le deuxième diamètre (D2), où les ouvertures de passage (7) sont alignées sur des ouvertures de raccordement (2, 3, 11, 12) ayant un premier diamètre (D1) et situées sur la plaque de base, comprenant au moins une plaque de recouvrement (10), où l'échangeur de chaleur à plaques empilées présente au moins un réservoir récepteur (18) pour de la brasure en excédent, où, dans la zone des ouvertures de raccordement (2, 3, 11, 12), au moins une partie en creux de forme annulaire et configurée comme une rainure annulaire (4, 5) est disposée comme le réservoir récepteur au moins au nombre de un pour de la brasure en excédent, sur le côté (la) de la plaque de base (1) tournée vers la pile, où le deuxième diamètre (D2) de l'ouverture de passage (7) est plus grand que le premier diamètre (D1) de l'ouverture de raccordement (2) et est plus grand qu'un diamètre intérieur de la rainure annulaire (4, 5), de sorte que la circonférence de l'ouverture de passage (7) se situe à l'intérieur de la largeur de rainure (b) de la rainure annulaire (4, 5).

2. Echangeur de chaleur à plaques empilées selon la revendication 1, **caractérisé en ce que** l'échangeur de chaleur à plaques empilées (9) présente au moins un élément (19) produisant des turbulences, élément qui est inséré en particulier entre deux plaques adjacentes (6, 8) et présente au moins une ouverture de pièce intercalaire à turbulences (24) ayant un troisième diamètre (D3).

3. Echangeur de chaleur à plaques empilées selon l'une des revendications 1 ou 2, **caractérisé en ce que** la rainure annulaire (4, 5) est configurée de façon circulaire et en particulier de façon concentrique autour de l'ouverture de raccordement (2, 3, 11, 12) de la plaque de base (1).

4. Echangeur de chaleur à plaques empilées selon l'une quelconque des revendications 1 à 3, **caractérisé en ce que** la rainure annulaire (4, 5) présente une largeur b ≥ 0,1 mm, en particulier une largeur b = 1 mm.

5. Echangeur de chaleur à plaques empilées selon la revendication 4, **caractérisé en ce que** la rainure annulaire (4, 5) présente une profondeur t ≥ 0,05 mm, en particulier de 0,1 mm à 1,0 mm.

6. Echangeur de chaleur à plaques empilées selon l'une des revendications 4 ou 5, **caractérisé en ce que** la rainure annulaire (4, 5) est configurée en forme de rectangle et / ou en forme de v et / ou en forme de u, etc.

7. Echangeur de chaleur à plaques empilées selon l'une quelconque des revendications 4 à 6, **caractérisé en ce qu'**au moins un premier flanc de rainure (22) de la rainure annulaire (4, 5) forme, avec au moins un deuxième flanc de rainure (23) de la rainure annulaire (4, 5), un angle α de 10° à 180°, en particulier de 20° à 90°.

8. Echangeur de chaleur à plaques empilées selon l'une quelconque des revendications 1 à 7, **caractérisé en ce qu'**un premier rapport de diamètre (S1) du premier diamètre (D1), relativement au deuxième diamètre (D2), est supérieur à 0,3 et en particulier compris entre 0,7 et 0,9.

9. Echangeur de chaleur à plaques empilées selon l'une quelconque des revendications 1 à 8, **caractérisé en ce que** le deuxième diamètre (D2) d'une ouverture de passage (7) d'une plaque (6) placée tout en bas est inférieur à un troisième diamètre (D3) d'une ouverture de pièce intercalaire à turbulences (24) d'un élément (19) produisant des turbulences, et **en ce que**, en particulier, un deuxième rapport de diamètre (S2) du deuxième diamètre (D2), relativement au troisième diamètre (D3), est inférieur à 1 et en particulier compris entre 0,9 et 0,5.

10. Echangeur de chaleur à plaques empilées selon l'une quelconque des revendications 1 à 9, **caractérisé en ce que** la plaque de base (1) présente au moins une surface de bordure (25) qui forme, avec une surface de fond (26) de la plaque de base (1), un angle β, où l'angle β est compris entre 0° et 150°, en particulier entre 90° et 140° et en particulier de 110°.
